# EUROPEAN PATENT SPECIFICATION

(11) **EP 3 040 213 B1**
(45) Date of publication and mention of the grant of the patent: **02.10.2019**
(21) Application number: 14839395.2
(22) Date of filing: 29.08.2014
(51) Int. Cl.: B29D 30/70, B60C 9/18, B60C 1/00

(54) **PNEUMATIC TYRE WITH SEPARATION RESISTANCE AT THE END PART OF THE BELT**
LUFTREIFEN MIT SEPARATIONSWIDERSTAND AM RAND DES GÜRTELS
PNEU AVEC RÉSISTANCE À LA SÉPARATION EN BOUT DE CEINTURE

(30) Priority: 29.08.2013 JP 2013177766
(43) Date of publication of application: 06.07.2016
(73) Proprietor: Bridgestone Corporation, Tokyo 104-8340 (JP)
(72) Inventor: TAKEI Kenichi, Kodaira-shi Tokyo 187-8531 (JP)
(74) Representative: Oxley, Robin John George
(86) International application number: PCT/JP2014/072789
(87) International publication number: WO 2015/030194

(56) References cited:
- WO-A1-2009/125001
- DE-A1-102005 049 184
- JP-A- H0 885 307
- JP-A- H04 252 705
- JP-A- 2000 177 316
- JP-A- 2000 177 316
- JP-A- 2004 009 666
- JP-A- 2007 331 468
- JP-A- 2008 024 826
- JP-A- 2008 024 826

## Description

### Technical Field

The present invention relates to a pneumatic tyre having a separation resistance.

### Background Art

In pneumatic tyres, an end cover rubber is disposed at an end part of a belt in a steel belt structure in order to inhibit troubles brought about due to separation at the end part of the belt, and the end cover rubber is further reduced in elasticity, whereby distortion at the end part of the belt has been prevented from concentrating to enhance separation resistance.

Also, in a belt of organic fibres such as nylon, an end part of the belt is interposed by sheet rubbers to secure an inter-belt gauge at the end part of the belt, whereby distortion at the end part of the belt has been prevented from concentrating to enhance separation resistance. Also in the structure of the above nylon belt, an effect of further inhibiting distortion from concentrating can be expected by using a low elastic rubber, but a low elastic rubber used for a steel belt is stiff as compared with a treat rubber used for the organic fibres, and therefore even if the low elastic rubber is diverted as the low elastic rubber is to the nylon belt, separation resistance is not enhanced. Further, separation resistance is scarcely enhanced even by applying a composition which provides a rubber with a low elasticity by varying an amount of a cross-linking agent based on a treat rubber for organic fibres, and separation resistance has not been able to be further enhanced.

### Prior Art Documents

### Patent documents

Patent document 1: Japanese Patent Application Laid-Open No. 2008-307944

Reference is also made to JP 2000-177316 which discloses a heavy load pneumatic radial tire and JP 2008-024826 which discloses a pneumatic tire using a rubber composition. In addition, DE 10 2005 049184 discloses a vehicle tire comprising padded ply edges.

### Disclosure of the Invention

### Problem to be solved by the Invention

To prevent separation at an end part of the belt Means for solving Problem

A rubber sheet having a lower 100% modulus than a 100% modulus of a belt treat of the belt is arranged in the vicinity of an end part of the belt. In such a case, an amount of sulphur in the composition of the rubber sheet is equivalent to or larger than those of the peripheral members.

That is, the present invention resides in the following items (1) to (6):
(1) A pneumatic tyre in which a rubber sheet having a lower 100% modulus than a 100% modulus of a belt treat rubber and blended with sulphur in an amount of 80 to 140% based on an amount of sulphur blended in the belt treat rubber is arranged to cover an end part of the belt, wherein an amount of carbon black blended in the rubber sheet is 70 to 95% based on an amount of carbon black blended in the belt treat rubber; in addition to a multi-layer comprising plural repeated belt layers and rubber sheet layers, a protective layer prepared by coating metal cords or organic fibres with a rubber is provided, and a border rubber sheet layer is further provided between the multi-layer and the protective layer, wherein the rubber for coating the metal cords or the organic fibres of the protective layer and the rubbers of the respective layers including the border rubber sheet layer are the rubber of the rubber sheet.
(2) The pneumatic tyre as described in the above item (1), wherein the 100% modulus of the rubber sheet is 60 to 95% of the 100% modulus of the belt treat rubber.
(3) The pneumatic tyre as described in the above item (1) or (2), wherein an amount of sulphur blended in the rubber sheet is 100 to 120% based on the amount of sulphur blended in the belt treat rubber.
(4) The pneumatic tyre as described in any one of the above items (1) to (3), wherein the rubber sheet has a constant thickness of 0.3 to 2 mm or is provided with a linear or curved gradient or step over a whole part or a part thereof in a longitudinal direction of the whole part of the rubber sheet.
(5) A heavy duty tyre characterised by any one of the above items (1) to (4).
(6) An aircraft tyre characterised by item (1).

A pneumatic tyre characterised by item (1) of the present invention can be provided, wherein a stress is relaxed from concentrating at an end part of a belt by a rubber sheet, and separation resistance at the end part of the belt is enhanced.

The 100% modulus is controlled to 95% or less of the 100% modulus of the treat rubber according to the range of the 100% modulus in item (2), whereby a difference in the elastic modulus makes it possible to exert a satisfactory effect for absorbing the stress. On the other hand, controlling the 100% modulus to 60% or more makes it possible to provide a pneumatic tyre in which excessive distortion is prevented from concentrating onto the rubber sheet and in which separation resistance is suitably maintained.

A blend amount of sulphur shown in item (3) makes it possible to provide a pneumatic tyre in which sulphur is prevented from transferring attributable to a difference in a blend amount of sulphur between the treat rubber and the rubber sheet and in which the 100% modulus is controlled to the set range.

A blend amount of carbon black shown in item (1) makes it possible to control the 100% modulus to the set range; controlling a blend amount of carbon black to 95% or less makes it possible to reduce the elasticity to such an extent that the 100% modulus is sufficiently different from the 100% modulus of the treat rubber; on the other hand, controlling a blend amount of carbon black to 70% or more makes it possible to provide a pneumatic tyre which is maintained in breaking resistance of a rubber sheet itself and prevented from excessive concentration of distortion and which is maintained in separation resistance.

Controlling a thickness of the rubber sheet to 0.3 mm or more in item (4) makes it possible to provide a pneumatic tyre with satisfactory stress relaxation effect, and on the other hand, controlling the thickness to 2 mm or less makes it possible to inhibit the pneumatic tyre from being increased in a weight more than necessary and being distorted in a structure. Also, the more optimum relaxation effect exerted by the rubber sheet having such a form as matching a manner in which stress concentration is caused in the above range of the thickness makes it possible to provide a pneumatic tyre having separation resistance.

Arranging the rubber sheet to cover around the end part of the belt as shown in item (1) makes it possible to provide a pneumatic tyre with a satisfactory stress relaxation effect and inhibit the pneumatic tyre from being increased in a weight more than necessary and being disturbed in a structure.

A heavy duty pneumatic tyre characterised by any one of the above items (1) to (4) can be provided according to item (5).

A pneumatic tyre which is improved in separation resistance in a protective layer and a border rubber sheet layer is provided according to a constitution in which the rubbers in the protective layer and the border rubber sheet layer are related to the rubber sheet in item (1).

An aircraft pneumatic tyre characterised by item (1) can be provided according to item (6).

### BRIEF DESCRIPTION of THE DRAWINGS

Fig. 1 is a drawing to exemplify the form of the rubber sheet.
Fig. 2 is a drawing to show the positional relationship in which the rubber sheets are arranged to the belt layers.
Fig. 3 is a drawing to show the arrangements of the respective members in the case of a pneumatic tyre comprising a protective layer and a border rubber sheet layer.
Fig. 4 is a drawing to show the constitution partially different from the constitution shown in Fig. 3.

### MODE FOR CARRYING OUT THE INVENTION

The embodiments of the present invention shall be explained below in detail.

The present invention relates to a pneumatic tyre in which a rubber provided with a small 100% modulus as compared with that of a belt treat rubber and reduced in elasticity is arranged in the vicinity of a belt end part where troubles brought about due to separation are concerned about, whereby a stress is relaxed from concentration to prevent separation. A thickness and a 100% modulus of the rubber sheet are set up, and the blend amounts of carbon black and sulphur are controlled to match the above setting so that the thickness and the 100% modulus of the rubber sheet match the kind and the structure of the pneumatic tyre, whereby provided is a pneumatic tyre which meets the objects, particularly a heavy duty pneumatic tyre including an aircraft tyre.

In the present invention, a rubber provided with a smaller 100% modulus than a 100% modulus of a treat rubber and reduced in elasticity is arranged as a rubber sheet between the layers at a belt end part. To be more specific, the rubber sheet is the rubber having a 100% modulus falling in a range of preferably 60 to 95%, more preferably 80 to 95% of a 100% modulus of a treat rubber. To be fundamental, if the rubber has a smaller 100% modulus than the 100% modulus of the treat rubber, the rubber can exert a stress relaxation effect, and if the rubber has a 100% modulus of 95% or less, the rubber can be reduced in elasticity with a difference of a certain extent. On the other hand, as far as the lower limit thereof is concerned, the rubber having a 100% modulus of up to 60% can be used, though depending of the structure thereof, without causing too much concentration of distortion.

In order to obtain the rubber provided with a smaller 100% modulus than the 100% modulus of the treat rubber and reduced in elasticity, a method in which the elastic modulus is adjusted according to an extent of cross-linking of the rubber based on a blend amount of sulphur, and a method in which the elastic modulus is adjusted by a filler are available, however the method in which the elastic modulus is adjusted according to an extent of cross-linking of the rubber is not easy. If the rubbers comprise independent rubber compositions respectively, the rubbers can be reduced in elasticity by decreasing of an extent for cross-linking with less amount of sulphur. However, if the parts which are different in a blend amount of sulphur are arranged closely, sulphur is transferred from the part containing more sulphur to the part containing less sulphur before heating to proceed with cross-linking after blending sulphur. Therefore, the elastic modulus is reduced less than expected in the part where the elastic modulus is planned to be increased by blending more sulphur, and on the contrary, the elastic modulus is increased in the part where the elastic modulus is planned to be reduced, so that the difference is decreased, and it is difficult to obtain a difference in the elastic modulus as designed. Accordingly, it is not practical to control the elastic modulus by a sulphur amount and an extent of cross-linking. Sulphur can be prevented from being transferred by blending the rubber sheet with sulphur in an amount of 80 to 140% of sulphur blended in the treat rubber so that such a difference in a blend amount as bringing about transferring of sulphur between the treat rubber and the rubber sheet is not caused, and a blend amount of sulphur in the rubber sheet is preferably 100 to 120%. More sulphur than in the treat rubber is blended in the rubber sheet in a certain case because of the reason that a difference in the elastic modulus can stably be obtained by transferring of sulphur.

On the other hand, in the method in which the elastic modulus is adjusted by a filler, to be specific, a blend amount of carbon black is adjusted. Unlike the case of blending sulphur, carbon back does not cause transferring between the layers even when composition layers which are different in a blend amount of carbon black are adjacent, and therefore the elastic moduli of the respective layers can be adjusted according to the blend amounts. The blend amount of carbon black is 70 to 95%, preferably 80 to 95%.

A thickness of the rubber sheet depends on the structure of the tread part and the constitution of the belt layer, and the thickness is preferably 0.3 to 2 mm. Controlling the thickness to 0.3 mm or more makes it possible to prevent the stress from concentrating and exert the relaxation effect. Also, controlling the thickness to 2 mm or less makes it possible to secure the thickness necessary for relaxation of the stress. Further increase in the thickness results in bringing about an unnecessary increase in the weight and a rise in the cost, and further more improvement cannot be expected. Also, an unnecessary increase in a thickness of the rubber sheet exerts an influence on a structure between the belt layers, and therefore unexpected concentration of the stress can rather be brought about. A thickness of the rubber sheet can be changed in a suitable value depending on the 100% modulus, and in general, the thickness is increased preferably in the range described above when the 100% modulus is reduced.

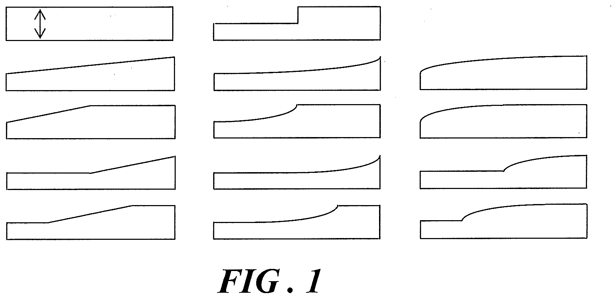

Also, the rubber sheet may be provided with a linear or curved gradient or step, as shown in Fig. 1, over a whole part or a part thereof in a longitudinal direction in a thickness falling in the range described above, and the stress may be relaxed more effectively with such a form as matching a manner of stress concentration. The thickness of the rubber sheet shows a dimension in a direction shown by a double-headed arrow in Fig. 1, and an example in which the thickness is constant and does not change is shown in the above case. In the other cases in which double-headed arrows are not shown, the rubber sheets have forms in which a thickness is provided with a gradient or a step as described above. Also, the longitudinal direction described above means a direction vertical to the direction shown by the double-headed arrow.

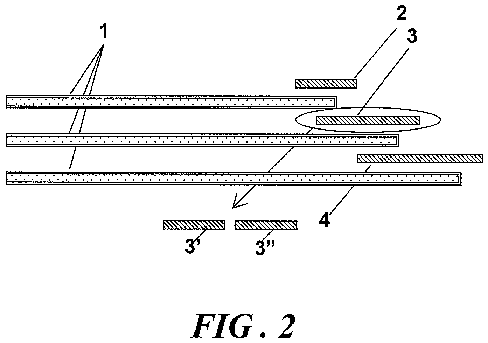

The rubber sheet is disposed for the purpose of relaxation of a stress at an end part of the belt in order to enhance the separation resistance, and therefore the rubber sheet may be arranged so that the rubber sheet covers the vicinity of the end part of the belt. Plural belt layers are provided in many cases, and the rubber sheets may be arranged so that rubber sheets cover all the end parts thereof or only the end parts of the layers on which a stress is particularly liable to concentrate. That is, in Fig. 2, the rubber sheets may be arranged to any or all of the parts 2 to 4 in which the rubber sheets are arranged to the belt layers 1. When plural rubber sheets are used for plural belt layers, each of rubber sheets may be changed in a 100% modulus, a thickness or a form. That is, in Fig. 2, the rubber sheets which are different in a 100% modulus, a thickness and a form may be arranged to any or all of the parts 2 to 4 in which the rubber sheets are arranged.

When the rubber sheets are arranged between the belt layers, the rubber sheets arranged to the belt layer in an upper layer and the belt layer in a lower layer may be connected into one. That is, as is the case with the part 3 in which the rubber sheet is arranged as shown in Fig. 2, one rubber sheet may be arranged. In the above case, one rubber sheet having a form in which a thickness is different at both ends may be used. On the other hand, the rubber sheet may be divided corresponding to the belts in the respective layers. That is, as shown in a drawer view of the rubber sheet arranging part 3 in Fig. 2, the arranging part 3 may be divided into an arranging part 3' and an arranging part 3" to arrange the rubber sheets to the respective parts. In the above case, the rubber sheets which are different in a 100% modulus, a thickness and a form may be arranged to the respective arranging parts.

Capable of being used as the rubber components of the respective parts, which are rubber components used for usual tyres, is at least one rubber selected from natural rubber: NR, modified natural rubbers obtained by subjecting NR to various treatments, synthetic rubbers including diene base rubbers, such as polyisoprene: IR, polybutadiene: BR, polychloroprene: CR, styrene-butadiene rubber: SBR, butyl rubber: IIR, acrylonitrile-butadiene rubber: NBR, and ethylene-propylene-diene rubber: EPDM, and natural rubber and diene base synthetic rubbers are preferably used. In general, the natural rubber is preferably used in a heavy duty pneumatic tyre and an aircraft pneumatic tyre.

In the present invention, the end part of the belt layer is covered with the rubber sheet having physical properties which are specifically adjusted, and therefore the belt layers having constitutions corresponding to those of usual pneumatic tyres, particularly a heavy duty pneumatic tyres and an aircraft pneumatic tyres, though variable according to the constitutions of the belt layers in the tread parts and the treat rubbers coating the cords thereof, can be used. Cords usually used for tyres, such as cords of organic fibres of nylon and aramid, and steel cords can be used as the cords of the belt layers. Alternatively, when provided with a belt end part having a concern of a separation trouble in a case of having whatever belt end parts in pneumatic tyres of whatever uses, the present invention can be applied to cover the periphery of the belt end part with the rubber sheet and relax the stress to thereby prevent the separation trouble.

In general, tyres hold the forms thereof against a high internal pressure and therefore are provided with belt layers, and in addition thereto, an aircraft pneumatic tyres are provided separately with a protective layer prepared by coating a reinforcing material comprising metal cords or organic fibres with a rubber for the purpose of protecting the tyres from external wounds.

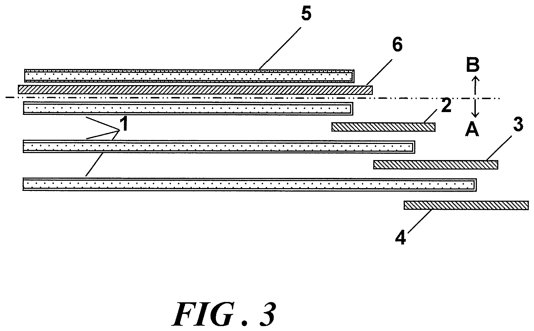

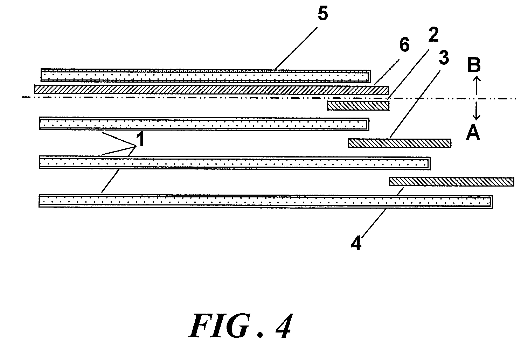

The protective layer can be formed by, for example, preparing one wavy cord sheet by arranging mutually parallel plural organic fibre cords extending wavily to a tyre peripheral direction and coating organic fibre cords with a rubber, and winding the above wavy cord sheet around a periphery of a reinforcing material, or by preparing a narrow strip by coating wavy cords arranged parallel with a rubber, and winding spirally the above strip around a periphery of a reinforcing material. The above wavy organic fibre cord of the protective layer still holds a wavy form in a use state of the product tyre and exerts a protective function for the belt in an inside against foreign matters stuck thereinto. The protective layer has a constitution similar to the constitution of the belt layer but is different in a purpose. In addition thereto, an aircraft tyre is large-sized and expensive, and therefore the aircraft tyre is used in many cases in a form of a re-tread tyre in which a tread part brought into contact with the ground is re-covered and repeatedly used. To explain the above matter with reference to Fig. 3, a tyre can be divided into a side belonging to a tyre case shown by "A" and a tread side shown by "B", wherein a belt layer shown by 1 can be regarded as belonging to the tyre case side, and a protective layer shown by 5 can be regarded as a reinforcing material belonging to the tread side. The constitution of an aircraft tyre may be a constitution of Fig. 4 in which a rubber sheet is further arranged in the vicinity of a belt layer end part at a side closest to a protective layer.

The protective layer described above belongs to the tread side, and a border rubber sheet layer shown by 6 can be provided on a border between the tread side and the tyre case side. When re-tread is carried out, a used tread is peeled off, and then a border part thereof is shaved off. A new tread part is stuck thereon again and vulcanised, whereby a tyre is reproduced. The border part can be used as a shaving margin in re-treading by providing the border rubber sheet layer to make it possible to prevent the tyre case reused in re-treading from being damaged. In the above case, the border rubber sheet layer is finished to a rough surface by a buff, whereby an adhesive property of the surface can be enhanced.

To explain the rubbers in order starting from the coating rubber of the protective layer according to Fig. 3 and Fig. 4, the range passes through the coating rubber, the border rubber sheet layer, and in the case of Fig. 4, the range passes through the rubber sheet and reaches the belt layer. The rubber components in the above range are selected from either of the rubber for the rubber sheet or the belt treat rubber in many cases, but the rubber components shall not specifically be restricted as long as the rubber components are rubbers used usually for tyre members. In the constitution, the coating rubber of the protective layer is close to the belt treat rubber, and the border rubber sheet layer is close to the rubber sheet, so that the rubbers matching the respective members can be selected. Also, an adverse effect is not exerted even if the constitution dares to be reversed. In either case, however, the rubber for the rubber sheet is most preferably used. The separation resistance is related to a manner of being influenced by the stress, and it is considered to be because of the reason that the belt layer and the protective layer are different in a manner of being influenced by the stress and that the separation resistance depends on a compatible state between the rubber components.

A composition obtained by blending, in addition to carbon black and sulphur which are specified in the present application, inorganic fillers such as silica, and calcium carbonate, and rubber chemicals such as a silane coupling agent, zinc oxide, stearic acid, an aromatic oil, a vulcanisation accelerator, and an antioxidant, which are used usually in the rubber industry, and mixing, moulding and vulcanising the composition by conventional methods as long as the effects of the present invention are not damaged can be used as the rubber composition for a pneumatic tyre using the rubber sheet in the present invention.

In a pneumatic tyre using the rubber sheet according to the present invention, a rubber composition and cords including a rubber sheet are wound in order on a tyre-moulding drum in a constitution according to the uses, and particularly in the cases of the belt layer and the rubber sheet, compositions prepared in blend amounts which are adjusted so that sulphur is not transferred more than setting between the treat rubber and the rubber sheet in a green tyre are set and moulded, followed by causing cross-linking with sulphur by heating in a usual vulcanising step, whereby a tyre as a product can be produced.

In a manufacturing step of a green tyre, those usually used in various pneumatic tyres can be used as a solvent, an adhesive and moulding equipment.

### EXAMPLES

The present invention shall be explained below with reference to examples and comparative examples, but the constitution of the present invention shall not be restricted to the following examples.

In Comparative Example 1, a tyre using a rubber sheet having a thickness of 1.2 mm in which the blend amounts of carbon black and sulphur were the same as those in a treat rubber as shown in Table 1 and in which a 100% modulus was identical to a 100% modulus of the treat rubber was prepared on the usual conditions for a tyre size of 50/20R32, and the tyre was subjected to durability test on drum at a load of 250 kN, an air pressure of 1400 kPa, a speed of 80 km/h and a slip angle of 3° to set a running time spent until a belt end part separation trouble was brought about to 100. On the other hand, in Examples and Comparative Examples, tyres were prepared by setting a blend amount of sulphur so that an index thereof based on that of the treat rubber fell in the range of the present invention, and the tyres prepared in Examples 1 to 11 in which the rubber sheets having a 100% modulus satisfying the condition of the present invention were used and the tyres prepared in Comparative Examples 2 to 4 in which the rubber sheets having a 100% modulus out of the scope for the condition of the present invention were used were subjected to durability test on drum under the conditions described above to obtain running times for durability test on drum and show and compare running times by an index in Table 1, wherein the index of the tyre prepared in Comparative Example 1 was set to 100.

Also, the 100% modulus was measured at a temperature of 25°C according to JIS K6251-2010 using a JIS dumbbell-like No. 3 test piece obtained from the rubber sheet by sampling from the tyre. The 100% moduli were shown and compared as well by an index in Table 1, wherein the index of the tyre prepared in Comparative Example 1 was set to 100.

**Table 1**

| | **Comparative Example** | | | | **Reference Example** | | | |
|---|---|---|---|---|---|---|---|---|
| | **1** | **2** | **3** | **4** | **1** | **2** | **3** | **4** |
| **100% Modulus** | 100 | 107 | 97 | 63 | 92 | 84 | 94 | 81 |
| **Carbon black** | 100 | 105 | 70 | 85 | 100 | 100 | 95 | 85 |
| **Sulphur** | 100 | 100 | 145 | 78 | 90 | 80 | 100 | 100 |
| **Running time for durability test on drum** | 100 | 90 | 99 | 98 | 101 | 102 | 110 | 133 |

| | **Reference Example** | | | | | | | |
|---|---|---|---|---|---|---|---|---|
| | **5** | **6** | **7** | **8** | | **9** | **10** | **11** |
| **100% Modulus** | 61 | 58 | 77 | 93 | | 78 | 65 | 58 |
| **Carbon black** | 70 | 68 | 70 | 70 | | 95 | 85 | 80 |
| **Sulphur** | 100 | 100 | 120 | 140 | | 80 | 80 | 80 |
| **Running time for durability test on drum** | 120 | 103 | 150 | 115 | | 113 | 108 | 101 |

As observed in Comparative Example 2, the tyre increased in a 100% modulus was decreased in a running time for durability test on drum and reduced in a separation resistance at an end part of the belt. In Comparative Examples 3 and 4 in which a 100% modulus of the rubber sheet was smaller than that of the treat rubber and in which the blend amounts of sulphur was out of scope of the present invention, the tyres were decreased as well in a running time for durability test on drum and reduced in resistance. On the other hand, it has been found that the tyres prepared in the examples in which the blend amounts of carbon black and sulphur satisfy the ranges of the present invention and in which a 100% modulus of the rubber sheet was smaller than that of the treat rubber are increased in a running time for durability test on drum and improved in a separation resistance. In Reference Examples 1 and 2 in which a blend amount of carbon black was set to 100% and in which sulphur was blended in a smaller amount, the tyres were observed to be decreased in a 100% modulus according to the sulphur amounts and observed to be increased in a running time for durability test on drum and improved in a separation resistance. In Reference Examples 3 to 6 in which a blend amount of sulphur was set to 100% and in which carbon black was blended in an amount smaller than 100%, the tyres were decreased sequentially in a 100% modulus, and in the above decreasing series, the tyre prepared in Example 4 was observed to be increased in a running time for durability test on drum to a maximum degree. In Reference Examples 1 and 3 and Reference Examples 2 and 4 in which the 100% modulus stayed in similar levels, the tyres were improved more in a running time for durability test on drum in Reference Examples 3 and 4 in which a blend amount of sulphur was set to 100% and in which carbon black was blended in a decreased amount. In Reference Examples 7 to 11 in which a sulphur amount was changed in the condition ranges of the carbon black amounts in Reference Examples 3 to 5, particularly the tyre prepared in Reference Example 7 was observed to be increased in a running time for durability test on drum to a maximum degree and improved in a separation resistance.

Further, tyres having a constitution in which a protective layer and a border rubber sheet were provided were produced in Comparative Example 5 in which the above rubbers and sheet rubber were the identical to the belt treat rubber of the belt layer and Reference Examples 12 to 18 and Example 19 in which the rubbers of the protective layer and the border rubber sheet layer were "a" corresponding to the belt treat rubber or "b" corresponding to the sheet rubber, and tyres were subjected to the running time for durability test on drum as was the case with Reference Examples 1 to 11 to show and compare the results by an index in Table 2, wherein the running time for durability test on drum of the tyre prepared in Comparative Example 5 was set to 100. The reinforcing material of the protective layer was prepared by coating aramid 3330 dtex/3 with the prescribed rubber a or b, and the border rubber sheet was produced by setting the prescribed rubber a or b to a thickness of 3 mm.

**Table 2**

| | **Comparative Example** | **Reference Example** | | | |
|---|---|---|---|---|---|
| | **5** | **12** | **13** | **14** | **15** |
| **100% Modulus** | 100 | 92 | 92 | 92 | 92 |
| **Carbon black** | 100 | 100 | 100 | 100 | 100 |
| **Sulphur** | 100 | 90 | 90 | 90 | 90 |
| **Rubber for protective layer** | Rubber a | Rubber a | Rubber b | Rubber a | Rubber b |
| **Rubber for border rubber sheet layer** | Rubber a | Rubber a | Rubber a | Rubber b | Rubber b |
| **Running time for durability test on drum** | 100 | 104 | 101 | 119 | 120 |

| | **Reference Example** | | | | **Example** |
|---|---|---|---|---|---|
| | **16** | **17** | **18** | | **19** |
| **100% Modulus** | 81 | 81 | 81 | | 81 |
| **Carbon black** | 85 | 85 | 85 | | 85 |
| **Sulphur** | 100 | 100 | 100 | | 100 |
| **Rubber for protective layer** | Rubber a | Rubber b | Rubber a | | Rubber b |
| **Rubber for border rubber sheet layer** | Rubber a | Rubber a | Rubber b | | Rubber b |
| **Running time for durability test on drum** | 122 | 121 | 135 | | 138 |

| | | | | | |
|---|---|---|---|---|---|
| Rubber a: the identical rubber to the belt treat rubber Rubber b: the identical rubber to the sheet rubber | | | | | |

The tyre prepared in Comparative Example 5 was extended in a running time by addition of the protective layer and the border rubber sheet, and therefore the values were shown by an index based on the running time of the tyre prepared in Comparative Example 5, wherein the index was set to 100. In Reference Examples 12 to 18 and Example 19 in which the rubber a and the rubber b were used for the protective layer and the border rubber sheet, the tyres were extended in a running time further more than the tyre prepared in Comparative Example 5 and improved in durability. Among Reference Examples 12 to 18 and Example 19, the tyres prepared in Reference Examples 15 and 18 and Example 19 in which the rubber b was used for the coating rubber of the protective layer and the border rubber sheet were different in a composition for controlling the 100% modulus to a lower level than the 100% modulus of the belt treat rubber, and both of Reference Examples 15 and 18 and Example 19 were observed to be improved in a running time as compared with the tyres prepared in the examples in which the identical rubber was used for either one of the coating rubber of the protective layer and the border rubber sheet.

### INDUSTRIAL APPLICABILITY

Capable of being provided by the present invention are a pneumatic tyre which is less liable to cause a separation trouble and excellent in durability, particularly a heavy duty pneumatic tyre and an aircraft pneumatic tyre which are used under a severe environment.

### LETTERS and NUMERALS

1: Belt layer
2 to 4: Rubber sheet arranging parts
3', 3": Case in which a rubber sheet arranging part 3 is divided
5: Protective layer
6: Border rubber sheet
A: Tyre case side
B: Tread side

## Claims

1. A pneumatic tyre in which a rubber sheet having a lower 100% modulus than a 100% modulus of a belt treat rubber and blended with sulphur in an amount of 80 to 140% based on an amount of sulphur blended in the belt treat rubber is arranged to cover an end part of the belt, **characterised in that** an amount of carbon black blended in the rubber sheet is 70 to 95% based on an amount of carbon black blended in the belt treat rubber; in addition to a multi-layer comprising plural repeated belt layers (1) and rubber sheet layers, a protective layer (5) prepared by coating metal cords or organic fibres with a rubber is provided, and a border rubber sheet layer (6) is further provided between the multi-layer and the protective layer (5), wherein the rubber for coating the metal cords or the organic fibres of the protective layer (5) and the rubbers of the respective layers including the border rubber sheet layer (6) are the rubber of the rubber sheet.

2. The pneumatic tyre as described in claim 1, wherein the 100% modulus of the rubber sheet is 60 to 95% of the 100% modulus of the belt treat rubber.

3. The pneumatic tyre as described in claim 1 or 2, wherein an amount of sulphur blended in the rubber sheet is 100 to 120% based on the amount of sulphur blended in the belt treat rubber.

4. The pneumatic tyre as described in any one of claims 1 to 3, wherein the rubber sheet has a thickness of 0.3 to 2 mm or is provided with a linear or curved gradient or step over a whole part or a part thereof in a longitudinal direction of the whole part of the rubber sheet.

5. A heavy duty tyre **characterised by** any one of claims 1 to 4.

6. A tyre for an aircraft having the characteristics as described in claim 1.

## Patentansprüche

1. Luftreifen, in dem eine Gummibahn, die einen 100%-Modul aufweist, der niedriger ist als ein 100%-Modul eines Gürtel-Behandlungsgummis, und vermischt mit Schwefel in einer Menge von 80 bis 140 % auf Grundlage einer Menge an Schwefel, die in dem Gürtel-Behandlungsgummi beigemischt ist, dafür angeordnet ist, einen Endteil des Gürtels zu bedecken, **dadurch gekennzeichnet, dass** eine Menge von Ruß, die in der Gummibahn beigemischt ist, 70 bis 95 % auf Grundlage einer Menge an Ruß, die in dem Gürtel-Behandlungsgummi beigemischt ist, beträgt, wobei zusätzlich zu einer Mehrfachlage, die mehrere wiederholte Gürtellagen (1) und Gummibahnlagen umfasst, eine schützende Lage (5), die durch Überziehen von Metallkords oder organischen Fasern mit einem Gummi bereitet ist, bereitgestellt wird und eine Rand-Gummibahnlage (6) ferner zwischen der Mehrfachlage und der schützenden Lage (5) bereitgestellt wird, wobei der Gummi zum Überziehen der Metallkords oder der organischen Fasern der schützenden Lage (5) und die Gummis der jeweiligen Lagen einschließlich der Rand-Gummibahnlage (6) der Gummi der Gummibahn sind.

2. Luftreifen nach Anspruch 1, wobei der 100%-Modul der Gummibahn 60 bis 95 % des 100%-Moduls des Gürtel-Behandlungsgummis beträgt.

3. Luftreifen nach Anspruch 1 oder 2, wobei eine Menge an Schwefel, die in der Gummibahn beigemischt ist, 100 bis 120 % auf Grundlage der Menge an Schwefel, die in dem Gürtel-Behandlungsgummi beigemischt ist, beträgt.

4. Luftreifen nach einem der Ansprüche 1 bis 3, wobei die Gummibahn eine Dicke von 0,3 bis 2 mm aufweist oder mit einer linearen oder gekrümmten Neigung oder Stufe über einen gesamten Teil oder einen Teil derselben in einer Längsrichtung des gesamten Teils der Gummibahn versehen ist.

5. Hochleistungsreifen, **gekennzeichnet durch** einen der Ansprüche 1 bis 4.

6. Reifen für ein Luftfahrzeug, der die Kennzeichen nach Anspruch 1 aufweist.

## Revendications

1. Bandage pneumatique, dans lequel une feuille de caoutchouc présentant un module à 100% inférieur à un module à 100% d'une gomme de traitement de la ceinture, et mélangée avec du soufre dans une quantité comprise entre 80 et 140%, sur la base d'une quantité de soufre mélangée dans la gomme de traitement de la ceinture, est agencée de sorte à recouvrir une partie d'extrémité de la ceinture, **caractérisé en ce qu'**une quantité de noir de carbone mélangée dans la feuille en caoutchouc est comprise entre 70 et 95%, sur la base d'une quantité de noir de carbone mélangée dans la gomme de traitement de la ceinture ; en plus d'une multicouche comprenant plusieurs couches de ceinture répétées (1) et des couches de feuille de caoutchouc, une couche de protection (5) préparée en revêtant des câblés métalliques ou des fibre organiques de caoutchouc est prévue, et une couche de feuille de caoutchouc de limitation (6) est en outre agencée entre la multicouche et la couche de protection (5), dans lequel le caoutchouc pour revêtir les câblés métalliques ou les fibres organiques de la couche de protection (5) et les caoutchoucs des couches respectives incluant la feuille de caoutchouc de limitation (6) constituent le caoutchouc de la feuille en caoutchouc.

2. Bandage pneumatique selon la revendication 1, dans lequel le module à 100% de la feuille en caoutchouc représente 60 à 95% du module à 100% de la gomme de traitement de la ceinture.

3. Bandage pneumatique selon les revendications 1 ou 2, dans lequel une quantité de soufre mélangée dans la feuille en caoutchouc est comprise entre 100 et 120%, sur la base de la quantité de soufre mélangée dans la gomme de traitement de la ceinture.

4. Bandage pneumatique selon l'une quelconque des revendications 1 à 3, dans lequel la feuille en caoutchouc a une épaisseur comprise entre 0,3 et 2 mm ou comporte un gradient linéaire ou courbé ou un gradin au-dessus d'une partie entière, ou une partie de celle-ci dans une direction longitudinale de la partie entière de la feuille en caoutchouc.

5. Bandage pneumatique pour poids lourd, **caractérisé par** l'une quelconque des revendications là 4.

6. Bandage pneumatique pour un avion, présentant les caractéristiques décrites dans la revendication 1.
